# EUROPEAN PATENT SPECIFICATION

(11) **EP 0 900 520 B1**
(45) Date of publication and mention of the grant of the patent: **08.01.2003**
(21) Application number: 98202919.1
(22) Date of filing: 02.09.1998
(51) Int. Cl.: A01D 67/00, A01B 59/042

(54) **A draw agricultural machine**
Gezogene landwirtschaftliche Maschine
Machine agricole tractée

(30) Priority: 08.09.1997 NL 1006969
(43) Date of publication of application: 10.03.1999
(73) Proprietor: MAASLAND N.V., 3155 PD Maasland (NL)
(72) Inventor: de Hoog, Maarten Cornelis Jacob, 3235 AS Rockanje (NL)
(74) Representative: Corten, Maurice Jean F.M.

(56) References cited:
- EP-A- 0 452 237
- EP-A- 0 524 131
- DE-C- 392 166
- DE-U- 9 414 597
- FR-A- 2 345 066
- NL-A- 6 503 955
- US-A- 2 316 397
- US-A- 3 919 831
- US-A- 5 566 535
- US-A- 5 642 607

## Description

The invention relates to a drawn agricultural machine comprising a frame supported by running wheels, in particular a machine which, during operation, besides with the running wheels, also rests on the ground with other parts, such as a mower-crusher, which machine is provided with a drawbar that is pivotable relative to the frame of the machine about an upwardly orientated shaft and which machine is further provided with at least one hydraulic cylinder ensuring the adjustment of the drawbar, the running wheels being adjustable in height also by means of at least one hydraulic cylinder.

With the known machines of this type the problem occurs that, at the end of a strip of soil that has been worked, e.g. mowed, the machine is lifted, e.g. for making a bend for the purpose of mowing an adjacent strip of soil. By lifting the machine out of work, the centre of gravity will be located at a higher level than during operation and it will only be possible for the machine to be supported by the running wheels and the end of the drawbar. If the centre of gravity of the machine is located, seen from above, beside the connection line of the contact point of a running wheel and the connection of the drawbar with the tractor, the machine may be inclined to overturn.

The invention aims at obviating this drawback.

According to the invention there are provided means with the aid of which the two hydraulic cylinders can be adjusted at least substantially simultaneously, so that the drawbar and the running wheels can be adjusted at least substantially simultaneously into a new position, the drawbar being adjusted in sideward direction and the running wheels in upward direction relative to the frame.

According to an embodiment of the invention the drawn agricultural machine, in particular a machine as described in the foregoing, comprises a frame supported by running wheels, the machine comprising at its front side a drawbar fitted to the frame of the machine, which drawbar is connected with the machine so as to be pivotable about an upwardly orientated shaft and which drawbar can be adjusted about the upwardly orientated shaft by means of a hydraulic cylinder, said hydraulic cylinder being pivotable about an upwardly orientated shaft relative to the frame and further being pivotable, at some distance from this upwardly orientated shaft, via a second upwardly orientated shaft, while, besides this hydraulic cylinder, there is provided a further hydraulic cylinder which is pivotable about an upwardly orientated shaft relative to the drawbar.

In accordance with an inventive feature, the drawbar is connected with the frame so as to be pivotable about the upwardly orientated shaft in such as manner that the agricultural machine can work either to the left or the right side of the centre line of a tractor moving the agricultural machine forward. In particular with such a machine the risk of the machine getting out of balance is considerable.

According to a further inventive feature, seen in the direction of travel A, the drawbar is coupled with the frame in the middle or near the middle thereof.

With such a coupling of the drawbar the risk of getting out of balance in the situation of large pivoting movements is considerable as well.

According to a further inventive aspect, the invention relates to a method of steering an agricultural machine along a bend, which agricultural machine is drawn by a drawbar and provided with running wheels and is intended to drive during operation over a strip of soil located beside a tractor by which it is moved forward, while, when the machine is lifted out of work, e.g. for describing a bend, first the drawbar is pivoted along the bend through an angle in the direction of movement, whereafter the machine is lifted out of work relative to the running wheels and the drawbar is, at least substantially simultaneously, pivoted further in the same direction. According to a further embodiment of the invention, after the bend has been described at least for the greater part, the machine is let down relative to the running wheels so that the machine is put into work again and the drawbar is pivoted further at least substantially simultaneously, so that the machine can be moved forward over a strip of soil located on the other side of the tractor. In this manner a very sharp bend can be made, while the problems of overturning have been reduced to a significant extent.

The invention will be explained in further detail on the basis of an exemplary embodiment.
Figure 1 is a plan view of an agricultural machine, in which the agricultural machine is in an operative position to the left side of a tractor by which it is moved forward;
Figure 2 is a plan view of the machine according to Figure 1, the machine being located more behind the tractor;
Figure 3 is a plan view of the machine, the latter being moved forward to the right side of the tractor;
Figure 4 is a plan view of the machine according to Figure 3, in which the machine is located more behind the tractor;
Figure 5 is a side view of the machine according to the arrow V in Figure 4, and
Figure 6 shows in plan view a number of positions of the machine while making a bend.

In this embodiment the agricultural machine according to the invention is a mower-crusher. The mower-crusher 1 comprises a drawbar 2 which is coupled with the frame 4 of the machine, pivotably about an upwardly orientated, preferably vertical shaft 3, in a coupling point which, relative to the direction of travel A, is located near the middle of the machine.

At its free end 5 the drawbar 2 is coupled to a tractor 6 in a manner known per se, preferably in such a manner that the tractor is allowed to pivot freely about the end 5.

Near a lateral side 7 of the agricultural machine a double-acting hydraulic cylinder 8 is coupled to the machine so as to be pivotable about an upwardly orientated, preferably vertical shaft 9.

This double-acting hydraulic cylinder 8 is coupled, pivotably about an upwardly orientated, preferably vertical shaft 10, to an element 11 acting as a lever; hereinafter this element will be designated as a lever 11.

The lever 11 is coupled, pivotably about an upwardly orientated, preferably vertical shaft 12, to the drawbar 2.

The shaft 10 is located on one side of the drawbar; on the other side of the drawbar 2 the lever 11 is provided with a coupling point 13 for a spring 14. The connection is such that also in this situation there is formed an upwardly orientated pivot shaft. The other end of the spring, which is designed as a tension spring, is fastened to the drawbar in a coupling point 15. Also in this situation the connection is such that the spring is pivotable relative to the drawbar about an upwardly orientated, preferably vertical shaft. The first hydraulic cylinder 8 is further coupled to a second hydraulic cylinder 16, which is single-acting in this embodiment. The two couplings preferably coincide, although some distance is possible.

The cylinder 16 is coupled to the drawbar 2 so as to be pivotable about an upwardly orientated, preferably vertical shaft 17.

The drawbar 2 is provided with a non-shown hydraulic line which is coupled, in a manner known per se, to the hydraulic system of the tractor 6.

This hydraulic line is coupled, in a non-shown manner, to the hydraulic cylinders 8 and 16, in such a manner that the tractor driver can operate optionally one cylinder, or the other cylinder, or both cylinders.

The agricultural machine is provided with two running wheels 18 which are disposed at the rear side of the machine.

As shown in Figure 5, in this embodiment the wheels 18 are each provided with a hydraulic cylinder 19 by means of which the wheels can be adjusted in upward direction. For this purpose the wheels 18 are fitted to arms 20 which are each fastened, pivotably about a horizontal shaft 21, to a support 22. To this support 22 also the hydraulic cylinders 19 are pivotably fitted, while the other ends of these cylinders are fastened, pivotably about a horizontal shaft, to the arms 20. from the drawbar 2 The machine comprises a hydraulic connection line extending from the drawbar 2, which hydraulic connection line constitutes, in a non-shown manner, the connection between the hydraulic line in the drawbar 2 and the hydraulic cylinders 19.

The function of the mower-crusher is as follows:

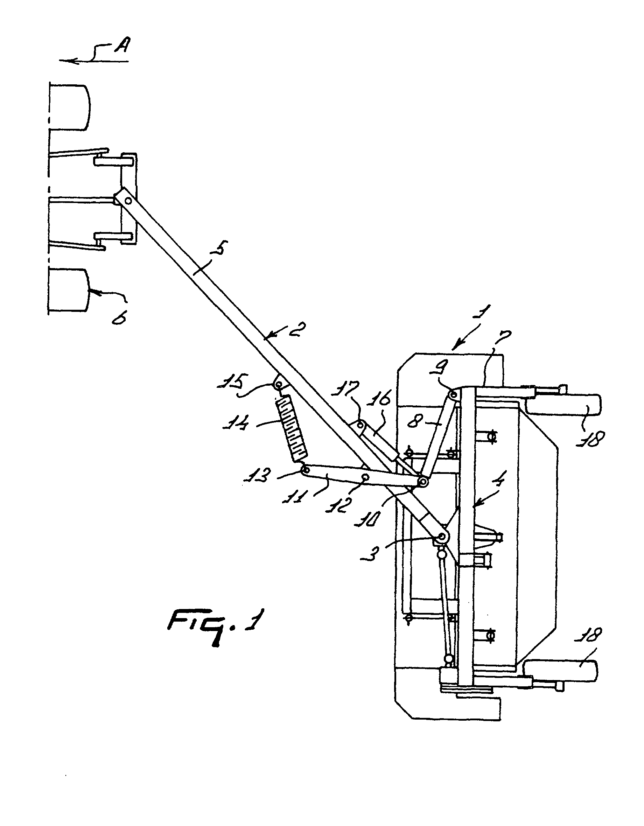

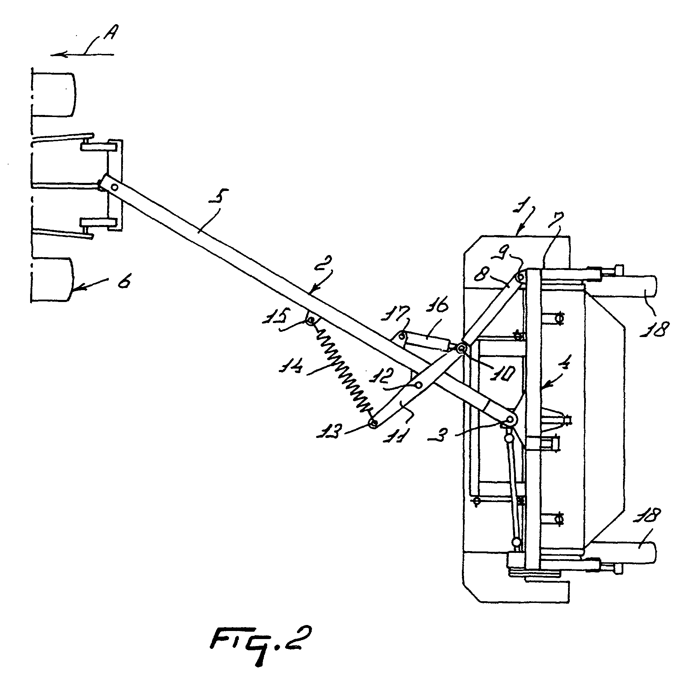

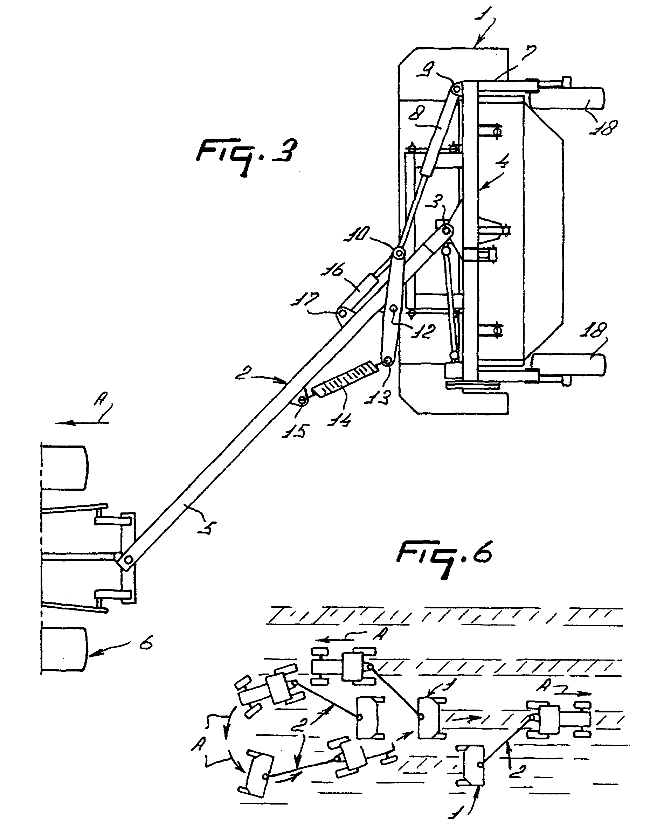

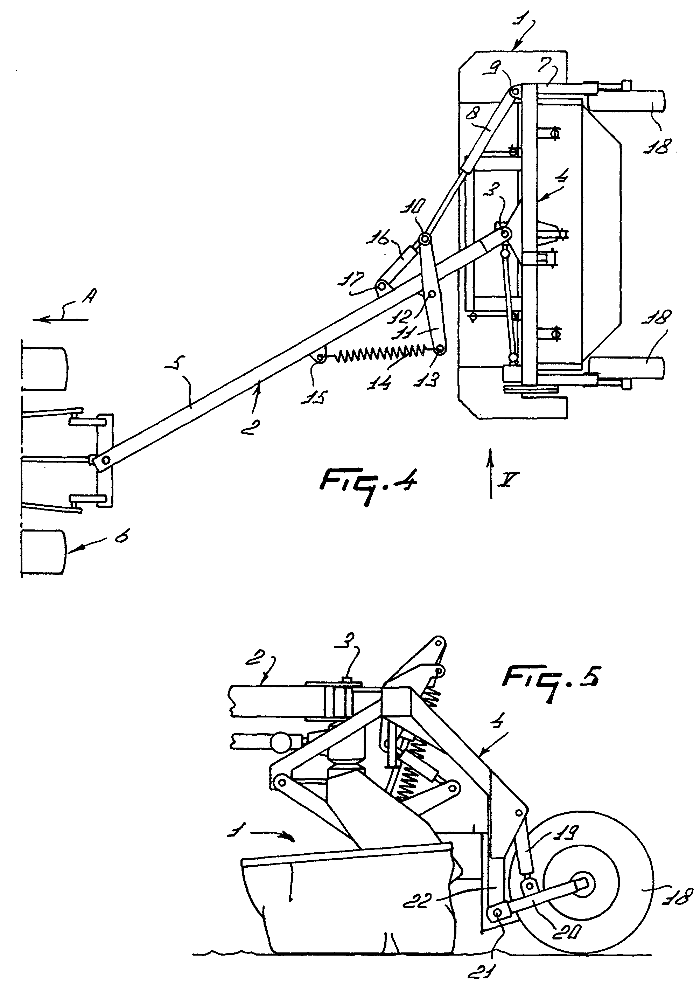

When the machine which, as shown in Figure 6, is located to the left side of the tractor 6 and has worked a strip of soil beside the tractor, arrives at the end of the meadow, the tractor and the machine have to make a bend if it is desired to mow subsequently a strip of soil located beside the strip that has already been worked. Consequently, at the end of the field the machine has to be lifted out of work. In the position of the drawbar corresponding to the one shown in Figure 1, there is a risk that, when making a bend with the machine in a lifted position, the machine will overturn. For this reason the hydraulic cylinders 16 and 19 are energized simultaneously or almost simultaneously, while the cylinder 16 is preferably energized first, so that first the drawbar is pivoted. Consequently, the drawbar pivots into the position of Figure 2, making in this embodiment an angle of approximately 30° relative to the direction of travel A, and the mower-crusher is lifted by means of the cylinders 19. Subsequently, during its movement along the bend, the drawbar is pivoted, by means of the hydraulic cylinder 8, from the left to the right through an angle of approximately 60°. The drawbar 2 then assumes the position of Figure 4 and is located to the right side of the tractor 6. However, this position is not far enough sideward for being able to mow beside the tractor. By energizing the hydraulic cylinder 16, the drawbar is pivoted further, so that it comes in the position shown in Figure 3 and consequently extends further sidewards. Simultaneously or almost simultaneously the machine is brought into the operative position for mowing by energizing the hydraulic cylinders 19 so that the machine drops. Now the machine is capable of mowing the new strip of soil located beside the preceding strip of soil.

An important advantage of the machine according to the invention is that this machine is capable of working both on the left and the right side beside the tractor.

In this embodiment the hydraulic cylinder is designed as a single-acting one and can be adjusted from one position into another by means of the tension spring 14.

It will be obvious that, if required, the hydraulic cylinder 16 can also be designed as a double-acting one, so that no spring is required.

In this embodiment the two hydraulic cylinders 8 and 16 are located on the same side of the drawbar. However, if the cylinder 16 would be disposed at the place of the spring 14, a compression spring could be disposed on the left side of the drawbar. Of course, the spring can be replaced by another resilient means.

In this embodiment and in the claims the control of the drawbar and the running wheels is effected by means of one or more hydraulic cylinders. However, all control means, e.g. control by gas pressure-operated cylinders or by an electric actuator, are within the protective scope of the claims.

Although the function of the invention has been explained in the foregoing in a situation in which the drawbar 2 is mounted in the middle of the machine, the invention can also successfully be applied even in a situation in which the drawbar in the machine shown in the drawings is coupled with the frame on the left side, while the cylinder 8 is arranged on the right side.

The invention is not restricted to the description but also comprises all the details mentioned in the claims and shown in the drawings.

## Claims

1. A drawn agricultural machine comprising a frame (4) supported by running wheels (18), in particular a machine which, during operation, besides with the running wheels, also rests on the ground with other parts, such as a mower-crusher, which machine is provided with a drawbar (2) that is pivotable relative to the frame (4) about an upwardly orientated shaft (3) and which machine is further provided with at least one hydraulic cylinder (16) ensuring the adjustment of the drawbar (2), the running wheels (18) being adjustable in height also by means of at least one hydraulic cylinder (19), **characterized in that** there are provided means with the aid of which these hydraulic cylinders (16, 19) can be adjusted at least substantially simultaneously, so that the drawbar (2) and the running wheels (18) can be adjusted substantially simultaneously into a new position, the drawbar (2) being adjusted in sideward direction and the running wheels (18) in upward direction relative to the frame (4).

2. A drawn agricultural machine as claimed in claim 1, **characterized in that**, when the running wheels (18) are adjusted in upward direction, the drawbar (2) is pivoted in such a manner that, seen in the direction of travel (A), the end (5) of the drawbar (2) is located more centrally relative to the middle of the machine.

3. A drawn agricultural machine as claimed in any one of the preceding claims, further **characterized in that** the drawbar (2) is connected with the machine so as to be pivotable about an upwardly orientated shaft (3) and which drawbar (2) can be adjusted about the upwardly orientated shaft (3) by means of a hydraulic cylinder (8), **characterized in that** said hydraulic cylinder (8) is pivotable about an upwardly orientated shaft (9) relative to the frame (4) and is further pivotable, at some distance from this upwardly orientated shaft (9), via a second upwardly orientated shaft (10), while, besides the hydraulic cylinder (8), there is provided a further hydraulic cylinder (16) which is pivotable about an upwardly orientated shaft (17) relative to the drawbar (2).

4. A drawn agricultural machine as claimed in any one of the preceding claims, **characterized in that** the drawbar (2) is connected with the frame (4) so as to be pivotable about the upwardly orientated shaft (3) in such as manner that the agricultural machine can work either to the left or the right side of the centre line of a tractor moving the agricultural machine forward.

5. A drawn agricultural machine as claimed in any one of the preceding claims, **characterized in that**, seen in the direction of travel A, the drawbar (2) is coupled with the frame (4) in the middle or near the middle thereof.

6. A drawn agricultural machine as claimed in any one of the preceding claims, **characterized in that**, seen in the direction of travel A, the drawbar (2) is coupled with the frame (4) at the front side thereof.

7. A drawn agricultural machine as claimed in claims 3 to 6, **characterized in that** the hydraulic cylinder (8) coupled to the frame (4) is coupled, pivotably about an upwardly orientated shaft (9), with an element (11) acting as a lever, which element (11) is coupled itself, pivotably about an upwardly orientated shaft (12), with the drawbar (2).

8. A drawn agricultural machine as claimed in claims 3 to 7, **characterized in that** the further hydraulic cylinder (16) is pivotable about an upwardly orientated shaft (10) relative to the hydraulic cylinder (8) coupled to the frame (4).

9. A drawn agricultural machine as claimed in any one of the preceding claims, **characterized in that** the drawbar (2) is coupled with the agricultural machine via the upwardly orientated pivot shaft (3).

10. A drawn agricultural machine as claimed in any one of the preceding claims, **characterized in that** the hydraulic cylinder (8) coupled to the frame (4) is also coupled to the agricultural machine via the relevant upwardly orientated pivot shaft (9).

11. A drawn agricultural machine as claimed in any one of the preceding claims, **characterized in that** the element (11) acting as a lever is coupled to the drawbar (2) via the relevant pivot shaft (15).

12. A drawn agricultural machine as claimed in any one of claims 3 to 11, **characterized in that** the further hydraulic cylinder (16) coupled to the drawbar is coupled with both the first hydraulic cylinder (8) and the drawbar (2) via the relevant pivot shaft (17).

13. A drawn agricultural machine as claimed in any one of the preceding claims, **characterized in that** the element (11) acting as a lever is also coupled to the drawbar (2) by means of a resilient element.

14. A drawn agricultural machine as claimed in any one of the preceding claims, **characterized in that** the coupling point (10) of the element (11) acting as a lever is located, with the hydraulic cylinder (8) coupled to the frame (4), on one side of the drawbar (2), and the coupling point (13) of the element (11) acting as a lever is located, with the resilient element (14), on the other side of the drawbar (2).

15. A drawn agricultural machine as claimed in any one of claims 3 to 14, **characterized in that** the machine is provided with running wheels (18) which are adjustable in upward direction with the aid of hydraulic means, such as one or more hydraulic cylinders.

16. A drawn agricultural machine as claimed in any one of claims 3 to 15, **characterized in that** there are provided hydraulic means with the aid of which, upon pivoting of the drawbar (2) into a transport position, also the running wheels (18) are brought into a transport position in upward direction.

17. A drawn agricultural machine as claimed in any one of the preceding claims, **characterized in that** the hydraulic cylinder (8) coupled to the frame (4) is a double-acting cylinder.

18. A drawn agricultural machine as claimed in any one of the preceding claims, **characterized in that** the further hydraulic cylinder (16) coupled to the drawbar is a single-acting cylinder.

19. A drawn agricultural machine as claimed in any one of the preceding claims, **characterized in that** the drawbar (2) has such a length and, seen from above, is pivotable through such an angle from the left to the right and vice versa, that an agricultural tractor which is coupled to the drawbar (2) at the end thereof, is located so far beside the machine that the machine, in its operative position, works a strip of soil beside the tractor.

20. A drawn agricultural machine as claimed in any one of the preceding claims, **characterized in that** the drawbar (2) is pivotable through an angle of more than 80°.

21. A drawn agricultural machine as claimed in any one of the preceding claims, **characterized in that** by pivoting of the drawbar (2) in a direction towards the middle of the machine, the machine assumes a position which is suitable for driving bends.

22. A drawn agricultural machine as claimed in claim 21, **characterized in that** the drawbar (2) is pivotable through an angle of at least approximately 20° from the operative position into the position for driving bends.

23. A drawn agricultural machine as claimed in any one of the preceding claims, **characterized in that** the hydraulic cylinders (16) can be operated from the tractor.

24. A drawn agricultural machine as claimed in any one of the preceding claims, **characterized in that** there are provided means with the aid of which the hydraulic cylinders (16 and 19) are adjusted simultaneously.

25. A method of steering along a bend of an agricultural machine drawn by a drawbar and provided with running wheels, as described in claims 1 to 24, which machine is intended for driving, during operation, over a strip of soil located beside a tractor moving the machine forward, **characterized in that**, upon taking the machine out of work, e.g. for describing a bend, first the drawbar is pivoted through an angle in the direction of the movement, whereafter the machine is lifted out of work relative to the running wheels, and the drawbar is pivoted further at least substantially simultaneously in the same direction.

26. A method as claimed in claim 25, **characterized in that**, after the bend has at least almost been described, the machine is let down relative to the running wheels so that the machine reassumes its operative position, and the drawbar is pivoted further at least substantially simultaneously, so that the machine can be moved forward over a strip of soil located on the other side of the tractor.

## Patentansprüche

1. Gezogene, landwirtschaftliche Maschine mit einem durch Laufräder (18) abgestützten Rahmen (4), insbesondere eine Maschine, die im Betrieb außer durch die Laufräder auch durch andere Teile auf dem Boden abgestützt ist, wie z. B. ein Mäher/Konditionierer, wobei die Maschine mit einer Zugschiene (2) versehen ist, die relativ zu dem Rahmen (4) um eine aufwärts gerichtete Achse (3) schwenkbar ist, und wobei die Maschine ferner mit mindestens einem Hydraulikzylinder (16) zum Einstellen der Zugschiene (2) versehen ist, wobei die Laufräder (18) ebenfalls mit Hilfe mindestens eines Hydraulikzylinders (19) in der Höhe verstellbar sind,
**dadurch gekennzeichnet, daß** Vorrichtungen vorhanden sind, mit deren Hilfe diese Hydraulikzylinder (16, 19) zumindest im wesentlichen gleichzeitig eingestellt werden können, so daß die Zugschiene (2) und die Laufräder (18) im wesentlichen gleichzeitig in eine neue Position eingestellt werden können, wobei die Zugschiene (2) relativ zu dem Rahmen (4) in seitlicher Richtung und die Laufräder (18) in der Höhe eingestellt werden.

2. Gezogene, landwirtschaftliche Maschine nach Anspruch 1,
**dadurch gekennzeichnet, daß** die Zugschiene (2) beim Einstellen der Laufräder (18) in der Höhe in der Weise verschwenkt wird, daß das Ende (5) der Zugschiene (2) in der Arbeitsrichtung (A) betrachtet relativ zu der Mitte der Maschine zentraler angeordnet ist.

3. Gezogene, landwirtschaftliche Maschine nach einem der vorhergehenden Ansprüche, ferner **dadurch gekennzeichnet, daß** die Zugschiene (2) mit der Maschine derart verbunden ist, daß sie um eine aufwärts gerichtete Achse (3) schwenkbar ist, und wobei die Zugschiene (2) mittels eines Hydraulikzylinders (8) um eine aufwärts gerichtete Achse (3) eingestellt werden kann,
**dadurch gekennzeichnet, daß** der Hydraulikzylinder (8) relativ zu dem Rahmen (4) um eine aufwärts gerichtete Achse (9) schwenkbar ist und ferner in einigem Abstand von dieser aufwärts gerichteten Achse (9) um eine zweite, aufwärts gerichtete Achse (10) schwenkbar ist, wobei neben dem Hydraulikzylinder (8) ein weiterer Hydraulikzylinder (16) vorgesehen ist, der relativ zu der Zugschiene (2) um eine aufwärts gerichtete Achse (17) schwenkbar ist.

4. Gezogene, landwirtschaftliche Maschine nach einem der vorhergehenden Ansprüche,
**dadurch gekennzeichnet, daß** die Zugschiene (2) mit dem Rahmen (4) verbunden ist, so daß sie um die aufwärts gerichtete Achse (3) in der Weise schwenkbar ist, daß die landwirtschaftliche Maschine entweder links oder rechts von der Mittellinie eines die landwirtschaftliche Maschine vorwärtsbewegenden Schleppers arbeiten kann.

5. Gezogene, landwirtschaftliche Maschine nach einem der vorhergehenden Ansprüche,
**dadurch gekennzeichnet, daß** in Arbeitsrichtung A betrachtet die Zugschiene (2) mit dem Rahmen (4) an oder nahe dessen Mitte verbunden ist.

6. Gezogene, landwirtschaftliche Maschine nach einem der vorhergehenden Ansprüche,
**dadurch gekennzeichnet, daß** in Arbeitsrichtung A betrachtet die Zugschiene (2) mit dem Rahmen (4) an dessen Vorderseite verbunden ist.

7. Gezogene, landwirtschaftliche Maschine nach den Ansprüchen 3 bis 6,
**dadurch gekennzeichnet, daß** der mit dem Rahmen (4) verbundene Hydraulikzylinder (8) um eine aufwärts gerichtete Achse (9) schwenkbar mit einem als Hebel wirkenden Element (11) verbunden ist, wobei das Element (11) seinerseits um eine aufwärts gerichtete Achse (12) schwenkbar mit der Zugschiene (2) verbunden ist.

8. Gezogene, landwirtschaftliche Maschine nach den Ansprüche 3 bis 7,
**dadurch gekennzeichnet, daß** der weitere Hydraulikzylinder (16) relativ zu dem mit dem Rahmen (4) verbundenen Hydraulikzylinder (8) um eine aufwärts gerichtete Achse (10) schwenkbar ist.

9. Gezogene, landwirtschaftliche Maschine nach einem der vorhergehenden Ansprüche,
**dadurch gekennzeichnet, daß** die Zugschiene (2) mit der landwirtschaftlichen Maschine über die aufwärts gerichtete Schwenkachse (3) verbunden ist.

10. Gezogene, landwirtschaftliche Maschine nach einem der vorhergehenden Ansprüche,
**dadurch gekennzeichnet, daß** der mit dem Rahmen (4) verbundene Hydraulikzylinder (8) über die entsprechende, aufwärts gerichtete Schwenkachse (9) auch mit der landwirtschaftlichen Maschine verbunden ist.

11. Gezogene, landwirtschaftliche Maschine nach einem der vorhergehenden Ansprüche,
**dadurch gekennzeichnet, daß** das als Hebel wirkende Element (11) mit der Zugschiene (2) über die entsprechende Schwenkachse (15) verbunden ist.

12. Gezogene, landwirtschaftliche Maschine nach einem der Ansprüche 3 bis 11,
**dadurch gekennzeichnet, daß** der mit der Zugschiene verbundene, weitere Hydraulikzylinder (16) sowohl mit dem ersten Hydraulikzylinder (8) als auch über die entsprechende Schwenkachse (17) mit der Zugschiene (2) verbunden ist.

13. Gezogene, landwirtschaftliche Maschine nach einem der vorhergehenden Ansprüche,
**dadurch gekennzeichnet, daß** das als Hebel wirkende Element (11) mittels eines elastischen Elements auch mit der Zugschiene (2) verbunden ist.

14. Gezogene, landwirtschaftliche Maschine nach einem der vorhergehenden Ansprüche,
**dadurch gekennzeichnet, daß** die Verbindungsstelle (10) des als Hebel wirkenden Elements (11) mit dem mit dem Rahmen (4) verbundenen Hydraulikzylinder (8) auf der einen Seite der Zugschiene (2) und die Verbindungsstelle (13) des als Hebel wirkenden Elements (11) mit dem elastischen Element (14) auf der anderen Seite der Zugschiene (2) liegt.

15. Gezogene, landwirtschaftliche Maschine nach einem der Ansprüche 3 bis 14,
**dadurch gekennzeichnet, daß** die Maschine mit Laufrädern (18) versehen ist, die mit Hilfe von Hydraulikvorrichtungen, wie z. B. einem oder mehreren Hydraulikzylindern, in der Höhe verstellbar sind.

16. Gezogene, landwirtschaftliche Maschine nach einem der Ansprüche 3 bis 15,
**dadurch gekennzeichnet, daß** Hydraulikvorrichtungen vorhanden sind, mit deren Hilfe beim Schwenken der Zugschiene (2) in eine Transportlage auch die Laufräder (18) nach oben in eine Transportlage befördert werden.

17. Gezogene, landwirtschaftliche Maschine nach einem der vorhergehenden Ansprüche,
**dadurch gekennzeichnet, daß** der mit dem Rahmen (4) verbundene Hydraulikzylinder (8) ein doppeltwirkender Zylinder ist.

18. Gezogene, landwirtschaftliche Maschine nach einem der vorhergehenden Ansprüche,
**dadurch gekennzeichnet, daß** der weitere, mit der Zugschiene verbundene Hydraulikzylinder (16) ein einfachwirkender Zylinder ist.

19. Gezogene, landwirtschaftliche Maschine nach einem der vorhergehenden Ansprüche,
**dadurch gekennzeichnet, daß** die Zugschiene (2) eine solche Länge aufweist und in der Draufsicht von links nach rechts und zurück über einen solchen Winkel schwenkbar ist, daß ein landwirtschaftlicher Schlepper, der an die Zugschiene (2) an deren Ende angeschlossen ist, so weit neben der Maschine angeordnet ist, daß die Maschine in ihrer Arbeitslage einen Bodenstreifen neben dem Schlepper bearbeitet.

20. Gezogene, landwirtschaftliche Maschine nach einem der vorhergehenden Ansprüche,
**dadurch gekennzeichnet, daß** die Zugschiene (2) über einen Winkel von mehr als 80° schwenkbar ist.

21. Gezogene, landwirtschaftliche Maschine nach einem der vorhergehenden Ansprüche,
**dadurch gekennzeichnet, daß** die Maschine durch Schwenken der Zugschiene (2) in Richtung auf die Mitte der Maschine eine Position einnimmt, die zum Fahren von Kurven geeignet ist.

22. Gezogene, landwirtschaftliche Maschine nach Anspruch 21,
**dadurch gekennzeichnet, daß** die Zugschiene (2) über einen Winkel von mindestens etwa 20° aus der Arbeitsposition in die Position zum Fahren von Kurven schwenkbar ist.

23. Gezogene, landwirtschaftliche Maschine nach einem der vorhergehenden Ansprüche,
**dadurch gekennzeichnet, daß** die Hydraulikzylinder (16) vom Schlepper aus betätigt werden können.

24. Gezogene, landwirtschaftliche Maschine nach einem der vorhergehenden Ansprüche,
**dadurch gekennzeichnet, daß** Vorrichtungen vorhanden sind, mit deren Hilfe die Hydraulikzylinder (16 und 19) gleichzeitig eingestellt werden.

25. Verfahren zum Lenken einer von einer Zugschiene gezogenen und mit Laufrädern versehenen, landwirtschaftlichen Maschine, wie sie in den Ansprüchen 1 bis 24 beschrieben ist, in einer Kurve, wobei die Maschine dazu bestimmt ist, im Betrieb über einen Bodenstreifen zu fahren, der neben einem die Maschine vorwärtsbewegenden Schlepper liegt,
**dadurch gekennzeichnet, daß** beim Außerbetriebsetzen der Maschine, beispielsweise um eine Kurve zu fahren, zuerst die Zugschiene in der Arbeitsrichtung über einen Winkel geschwenkt wird, worauf die Maschine relativ zu den Laufrädern aus der Arbeitslage gehoben und die Zugschiene zumindest im wesentlichen gleichzeitig in derselben Richtung weitergeschwenkt wird.

26. Verfahren nach Anspruch 25,
**dadurch gekennzeichnet, daß** die Maschine, nachdem die Kurve zumindest annähernd gefahren worden ist, relativ zu den Laufrädern herabgelassen wird, so daß die Maschine wieder ihre Arbeitslage einnimmt, und die Zugschiene zumindest im wesentlichen gleichzeitig weitergeschwenkt wird, so daß die Maschine über einen auf der anderen Seite des Schleppers liegenden Bodenstreifen vorwärtsbewegt werden kann.

## Revendications

1. Machine agricole tractée comprenant un châssis (4) supporté par des roues porteuses (18), en particulier une machine qui, en fonctionnement, en plus des roues porteuses, repose également sur le sol avec d'autres pièces, telles qu'une faucheuse broyeuse, ladite machine étant pourvue d'une barre d'attelage (2) qui peut tourner par rapport au châssis (4) autour d'un arbre orienté vers le haut (3) et ladite machine étant en outre pourvue d'au moins un vérin hydraulique (16) garantissant le réglage de la barre d'attelage (2), les roues porteuses (18) étant réglables en hauteur également au moyen d'au moins un vérin hydraulique (19), **caractérisée en ce que** des moyens sont prévus à l'aide desquels ces vérins hydrauliques (16, 19) peuvent être réglés au moins sensiblement simultanément de sorte que la barre d'attelage (2) et les roues porteuses (18) peuvent être réglées sensiblement simultanément dans une nouvelle position, la barre d'attelage (2) étant réglée dans la direction latérale et les roues porteuses (18) dans la direction verticale par rapport au châssis (4).

2. Machine agricole tractée selon la revendication 1, **caractérisée en ce que** dans le cas où les roues porteuses (18) sont réglées dans la direction verticale, la barre d'attelage (2) tourne de telle sorte que, vue dans la direction de déplacement (A), l'extrémité (5) de la barre d'attelage (2) est située de façon plus centrale par rapport au milieu de la machine.

3. Machine agricole tractée selon l'une quelconque des revendications précédentes, **caractérisée en outre en ce que** la barre d'attelage (2) est reliée à la machine de sorte à pouvoir tourner autour d'un arbre orienté vers le haut (3) et dont la barre d'attelage (2) peut être réglée autour de l'arbre orienté vers le haut (3) au moyen d'un vérin hydraulique (8) **caractérisé en ce que** ledit vérin hydraulique (8) peut tourner autour d'un arbre orienté vers le haut (9) par rapport au châssis (4) et peut en outre tourner, à une certaine distance à partir de cet arbre orienté vers le haut (9) par un second arbre orienté vers le haut (10), tandis que, en plus du vérin hydraulique (8), on prévoit un vérin hydraulique supplémentaire (16) qui peut tourner autour d'un arbre orienté vers le haut (17) par rapport à la barre d'attelage (2).

4. Machine agricole tractée selon l'une quelconque des revendications précédentes, **caractérisée en ce que** la barre d'attelage (2) est reliée au châssis (4) de sorte à pouvoir tourner autour de l'arbre orienté vers le haut (3) de telle sorte que la machine agricole peut fonctionner soit vers le côté gauche soit vers le côté droit de la ligne centrale d'un tracteur déplaçant la machine agricole en avant.

5. Machine agricole tractée selon l'une quelconque des revendications précédentes, **caractérisée en ce que**, vue dans la direction de déplacement A, la barre d'attelage (2) est couplée au châssis (4) au milieu ou près du milieu de celui-ci.

6. Machine agricole selon l'une quelconque des revendications précédentes, **caractérisée en ce que**, vue dans la direction de déplacement A, la barre d'attelage (2) est couplée au châssis (4) à l'avant de celui-ci.

7. Machine agricole tractée selon les revendications 3 à 6, **caractérisée en ce que** le vérin hydraulique (8) couplé au châssis (4) est couplé, de façon rotative autour d'un arbre orienté vers le haut (9), avec un élément (11) agissant comme un levier, dont l'élément (11) est lui-même couplé de façon rotative autour d'un arbre orienté vers le haut (12) avec la barre d'attelage (2).

8. Machine agricole tractée selon les revendications 3 à 7, **caractérisée en ce que** le vérin hydraulique supplémentaire (16) peut tourner autour d'un arbre orienté vers le haut (10) par rapport au vérin hydraulique (8) couplé au châssis (4).

9. Machine agricole tractée selon l'une quelconque des revendications précédentes, **caractérisée en ce que** la barre d'attelage (2) est couplée à la machine agricole par l'arbre de pivot orienté vers le haut (3).

10. Machine agricole selon l'une quelconque des revendications précédentes, **caractérisée en ce que** le vérin hydraulique (8) couplé au châssis (4) est également couplé à la machine agricole par l'arbre de pivot relatif orienté vers le haut (9).

11. Machine agricole tractée selon l'une quelconque des revendications précédentes, **caractérisée en ce que** l'élément (11) agissant comme un levier, est couplé à la barre d'attelage (2) par l'arbre de pivot relatif (15).

12. Machine agricole tractée selon l'une des revendications 3 à 11, **caractérisée en ce que** le vérin hydraulique supplémentaire (16) couplé à la barre d'attelage est couplé à la fois au premier vérin hydraulique (8) et à la barre d'attelage (2) par l'arbre de pivot relatif (17).

13. Machine agricole tractée selon l'une quelconque des revendications précédentes, **caractérisée en ce que** l'élément (11) agissant comme un levier est également couplé à la barre d'attelage (2) au moyen d'un élément résilient.

14. Machine agricole tractée selon l'une quelconque des revendications précédentes, **caractérisée en ce que** le point de couplage (10) de l'élément (11) agissant comme un levier est situé, avec le vérin hydraulique (8) couplé au châssis (4), sur un côté de la barre d'attelage (2), et le point de couplage (13) de l'élément (11) agissant comme un levier est situé, avec l'élément résilient (14) sur l'autre côté de la barre d'attelage (2).

15. Machine agricole tractée selon l'une quelconque des revendications 3 à 14, **caractérisée en ce que** la machine est prévue avec des roues porteuses (18) qui sont réglables dans la direction verticale à l'aide de moyens hydrauliques, tels qu'un ou plusieurs vérins hydrauliques.

16. Machine agricole tractée selon l'une quelconque des revendications 3 à 15, **caractérisée en ce que** l'on prévoit des moyens hydrauliques à l'aide desquels les roues porteuses (18) sont également amenées dans une position de transport dans la direction verticale, en faisant tourner la barre d'attelage (2) dans une position de transport.

17. Machine agricole tractée selon l'une quelconque des revendications précédentes, **caractérisée en ce que** le vérin hydraulique (8) couplé au châssis (4) est un vérin à double effet.

18. Machine agricole tractée selon l'une quelconque des revendications précédentes, **caractérisée en ce que** le vérin hydraulique supplémentaire (16) couplé à la barre d'attelage est un vérin à simple effet.

19. Machine agricole tractée selon l'une quelconque des revendications précédentes, **caractérisée en ce que** la barre d'attelage (2) a une telle longueur et, vue de dessus, peut tourner selon un tel angle de la gauche vers la droite et vice versa, que lorsqu'un tracteur agricole est couplé à la barre d'attelage (2) à l'extrémité de celle-ci, il est situé à côté de la machine, la machine, dans sa position de travail, travaillant une bande de sol à côté du tracteur.

20. Machine agricole tractée selon l'une quelconque des revendications précédentes, **caractérisée en ce que** la barre d'attelage (2) peut tourner selon un angle de plus de 80°.

21. Machine agricole tractée selon l'une quelconque des revendications précédentes, **caractérisée en ce qu'**en faisant tourner la barre d'attelage (2) dans une direction située vers le milieu de la machine, la machine prend une position qui convient pour conduire dans les virages.

22. Machine agricole tractée selon la revendication 21, **caractérisée en ce que** la barre d'attelage (2) peut tourner selon un angle d'au moins environ 20° à partir de la position de travail dans la position pour conduire dans les virages.

23. Machine agricole tractée selon l'une quelconque des revendications précédentes, **caractérisée en ce que** les vérins hydrauliques (16) peuvent être actionnés à partir du tracteur.

24. Machine agricole tractée selon l'une quelconque des revendications précédentes, **caractérisée en ce que** l'on prévoit des moyens avec l'aide desquels les vérins hydrauliques (16 et 19) sont réglés simultanément.

25. Procédé de conduite dans un virage avec une machine agricole tractée par une barre d'attelage et pourvue de roues porteuses, comme décrite selon les revendications 1 à 24, dont la machine est prévue pour conduire, en fonctionnement, sur une bande de sol située à côté d'un tracteur déplaçant la machine en avant, **caractérisée en ce qu'**en prenant la machine à l'arrêt, par exemple pour décrire un virage, on fait tout d'abord tourner la barre d'attelage selon un angle dans la direction du mouvement, après quoi la machine est soulevée du travail par rapport aux roues porteuses et la barre d'attelage tourne ensuite au moins sensiblement simultanément dans la même direction.

26. Procédé selon la revendication 25, **caractérisée en ce que** l'on baisse la machine par rapport aux roues porteuses après la quasi description du virage, de sorte que la machine reprend sa position de travail, et la barre d'attelage tourne en outre au moins sensiblement simultanément, de sorte que la machine peut être déplacée en avant sur une bande de sol située de l'autre côté du tracteur.
